# EUROPÄISCHE PATENTSCHRIFT

(11) **EP 2 150 780 B1**
(45) Veröffentlichungstag und Bekanntmachung des Hinweises auf die Patenterteilung: **24.07.2013**
(21) Anmeldenummer: 08758683.0
(22) Anmeldetag: 21.05.2008
(51) Int. Cl.: G01D 5/347

(54) **OPTOELEKTRONISCHES LAGEMESSVERFAHREN UND LAGEMESSEINRICHTUNG**
OPTOELECTRONIC POSITION MEASUREMENT METHOD AND DEVICE
PROCÉDÉ ET DISPOSITIF OPTOÉLECTRONIQUE DE MESURE DE POSITION

(30) Priorität: 24.05.2007 EP 07108837
(43) Veröffentlichungstag der Anmeldung: 10.02.2010
(73) Patentinhaber: Leica Geosystems AG, 9435 Heerbrugg (CH)
(72) Erfinder: VOKINGER, Urs, CH-9434 Au (CH); BERNHARD, Heinz, CH-9442 Berneck (CH); AMANN, Werner, A-6800 Feldkirch (AT)
(74) Vertreter: Kaminski Harmann
(86) Internationale Anmeldenummer: PCT/EP2008/004078
(87) Internationale Veröffentlichungsnummer: WO 2008/141817

(56) Entgegenhaltungen:
- EP-A- 0 597 705
- EP-A- 0 643 286
- EP-A- 1 111 347
- DE-A1- 19 621 188

## Beschreibung

Die Erfindung betrifft ein optoelektronisches Lagemessverfahren nach dem Oberbegriff des Anspruchs 1 und eine optoelektronische Lagemesseinrichtung nach dem Oberbegriff des Anspruchs 7.

Das Bestimmen von Richtungen, Winkeln und Längen als Lagen ist in vielen Anwendungsbereichen gefordert, wie beispielsweise in der geodätischen und industriellen Vermessung. Entwicklungen in der Winkelmesstechnik führten über mechanische Ablesevorgänge bis zur vollautomatisierten Winkelmessung nach dem heutigen Stand der Technik.

Bekannte automatisierte Lagemessvorrichtungen umfassen im Allgemeinen einen Codeträger und eine Abtasteinrichtung. Bei Winkelmesseinrichtungen ist der Codeträger üblicherweise relativ zur Abtasteinrichtung um eine Achse drehbar ausgebildet, wobei dann eine Winkellage des Codeträgers die zu messende Grösse darstellt. Der Codeträger kann zum Beispiel eine Teilung oder Codierung zur Positionsbestimmung aufweisen, wobei die Codierung auf einer Oberfläche oder Mantelfläche des Codeträgers aufgebracht sein kann.

Zur automatischen Erfassung der Lage wird der relativ zur Abtasteinrichtung bewegbare Codeträger mittels unterschiedlicher Techniken abgetastet. Bekannte Abtastverfahren sind elektronisch-magnetische, elektronische und optisch-elektronische Verfahren. Die folgenden Ausführungen beziehen sich auf optisch-elektronische Abtastverfahren und Abtasteinrichtungen, die insbesondere eine Beleuchtungseinrichtung und einen Detektor aufweisen.

Zur Bestimmung beispielsweise von Winkelstellungen von 0° bis 360° ist die Codierung üblicherweise in einem Vollkreis angeordnet. Die Winkelauflösung des Vollkreises bestimmt sich nach Art der Codierung und nach der zum Lesen der Codierung eingesetzten Abtasteinrichtung. So wird beispielsweise durch Aufbringen eines Codes in mehreren Spuren oder durch eine feinere Teilung die Winkelauflösung gesteigert, wobei die erreichbare Auflösung aus fertigungs- und kostentechnischen Gründen beschränkt ist. Zum Lesen des Codes sind z.B. Anordnungen von einem oder mehreren Detektoren bekannt. CCD-Zeilen-Arrays oder CCD-FlächenArrays können beispielsweise solche Detektoren darstellen.

Die schweizerische Patentschrift CH 658514 A5 offenbart eine solche Vorrichtung zum Messen einer Winkellage. Dabei wird eine Marke, deren Lage in Bezug auf eine Fläche von Sensoren die zu messende Grösse darstellt, auf diese Fläche abgebildet. Die Ausgangssignale der Sensoren werden in eine Auswerteschaltung geführt, die die Verteilung der Intensität der durch die Sensoren erzeugten Signale sequentiell ermittelt. Aus der Intensitätsverteilung kann die Lage der Marke in Bezug auf die Fläche von Sensoren abgeleitet werden.

Die Abmessungen einer Lagemesseinrichtung für geodätische Geräte sind vorteilhaft gering zu halten. Um eine entsprechend kleine und wenig aufwendige Bauweise zu erlauben, werden seit einiger Zeit die Beleuchtungseinrichtung und der Detektor der Lagemesseinrichtung auf einer gemeinsamen, elektrisch versorgten Platine angcordnet, und nicht wie zuvor ober- und unterhalb eines Codeträgers jeweils auf einer separaten elektrisch versorgten Platine.

In EP 0 597 705 A1 wird ein gekapselter opto-elektrischer Lagesensor zur Verwendung mit einer reflektiven Codescheibe offenbart. Die transparente Kapselung weist dabei konvex geformte Oberflächen auf, welche das ausgesendete und/oder empfangene Licht konzentrieren.

Das Dokument EP 1 111 347 offenbart ein opto-elektronisches System für Dimensionsmessvorrichtung, bei welchem ein Photosender, ein Photoempfänger und ein integrierter optischer Block zur Lichtkondensierung auf dem gleichen gedruckten Schaltkreis angebracht sind.

Die Publikation DE 196 21 188 A1 offenbart einen optischen Drehwinkelsensor welcher zur Strahlungsführung optische Elemente monolithisch auf oder in einem Grundkörper integriert. Durch die monolithische Integration der optischen Elemente kann der Drehwinkelsensor miniaturisiert hergestellt werden, was sich günstig auf Herstellkosten, Gewicht, Platzbedarf, Stabilität und Fertigungszuverlässigkeit auswirkt.

βei Lagemesseinrichtungen des Standes der Technik mit einer nebeneinander liegenden Anordnung des Detektors und der Beleuchtungseinrichtung werden die emittierten Strahlen beispielsweise durch ein Umlenkelement mit zwei planen, reflektierenden Flächen so umgelenkt, dass eine Abbildung des Codes durch den im Strahlgang nachgeordneten Codeträger auf dem Detektor erzeugt wird. Optional können dabei die emittierten Strahlen mittels einer der Beleuchtungsquelle direkt nachgeordneten Optik kollimiert werden.

Beispielsweise zeigt die US-Patentschrift US 7,145,127 B2 ein Umlenkelement für eine Lagemesseinrichtung, wobei das Umlenkelement zwei gegeneinander ausgerichtete Flächen zur zweifachen Reflexion der emittierten Strahlen aufweist und einen auf ein Sensor abbildbaren Code trägt und somit zusätzlich als Codeträger ausgebildet ist.

Zur Erzielung einer möglichst homogenen Beleuchtung bzw. Ausleuchtung des Codeträgers und zur Erzeugung einer möglichst gleichmässigen Code-Projektion auf dem Detektor werden inzwischen vermehrt Laserdioden als Strahlungsquellen zur Erzeugung der Codeprojektion verwendet. Beispielsweise offenbart die EP 0643286 eine optoelektronische Winkelmesseinrichtung mit einer Halbleiter-Laserdiode als Strahlungsquelle. Dabei werden bisher die Dioden derart angeordnet, dass die Emitterkante der Laserdioden parallel zu dem die Codeprojektion erfassenden Sensorarray ausgerichtet isL. Da die emittierte Strahlung in der Richtung quer zur Emissionskante eine höhere Divergenz aufweist als in der Richtung parallel zur Emissionskante, ist dabei ein Nachordnen einer Strahlformungsoptik zur Kollimation der Strahlung in einer Ebene senkrecht zur Emitterkante bekannt.

Die erzielbare Genauigkeit einer derartigen Lagemessung hängt von mehreren Faktoren ab, wie beispielsweise vom Kontrast der auf dem Sensorarray erzeugten Schattenprojektion des Codes.

Des Weiteren kann bei einem relativ zum Detektor bewegten Codeträger die Schattenprojektion des Codes auf den Detektor je nach Belichtungszeit entsprechend verschmieren. Um etwa eine Genauigkeit der relativen Lage des Codeträgers zum Detektor von 0,05µm beziehungsweise, bei Bestimmung einer Dreh-Lage des Codeträgers, von 0,25 Bogensekunden zu erreichen, darf die Belichtungszeit eine Dauer von ungefähr 200ns nicht überschreiten. Bei Messeinrichtungen des Standes der Technik würde allerdings bei einer Belichtungszeit von nur 200ns die Qualität der auf dem Detektor erzeugten Code-Projektion im Allgemeinen nicht genügen, um den Positionscode sicher auszulesen.

Eine Aufgabe der Erfindung ist somit die Bereitstellung eines Lagemessverfahrens und einer Lagemesseinrichtung, die eine erhöhte Messgenauigkeit ermöglichen.

Hierbei wird eine Verwendung gattungsgemässer, wenig aufwendig herstellbarer Laserdioden angestrebt.

Eine weitere Aufgabe ist eine Verringerung von unerwünschten Intensitätsschwankungen der optischen Strahlen bei der Beleuchtung des Codeträgers und der Erzeugung der Code-Projektion auf dem Erfassungselement.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Bei einem erfindungsgemässen Lagemessverfahren emittiert eine Laserdiode mittels ihrer Emitterkante optische Strahlung auf einen relativ zu einem Erfassungselement in einem Freiheitsgrad bewegbaren Codeträger, der einen optisch erfassbaren Positionscode trägt. Die Laserdiode, der bewegbare Positionscode und das Erfassungselement sind so angeordnet, dass eine optisch erfassbare Abbildung eines von der Relativposition des Codeträgers zur Beleuchtungsquelle abhängigen Teiles des Positionscodes auf dem Erfassungselement erzeugt wird. Das Erfassungselement weist dabei in Längsrichtung mindestens eine Zeile mit einer Vielzahl von linear angeordneten lichtempfindlichen Empfangsbereichen auf. Je nach empfangener Strahlung innerhalb der einzelnen Erfassungsbereiche werden Signale mit Strahlungsempfangsinformationen erzeugt, wobei ein Null-Signal gegebenenfalls als Information für einen Empfang keiner Strahlung verwendet werden kann. Anhand eines Auswertens der Signale wird der Code ausgelesen und eine relative Lage des Codeträgers zum Erfassungselement abgeleitet.

Im Gegensatz zur gemäss dem Stand der Technik bekannten Anordnung der Laserdiode parallel zur Sensorzeile bzw. zur Längsachse des Erfassungselements, wird gemäss der Erfindung die Laserdiode derart relativ zum Erfassungselement angeordnet und ausgerichtet, dass die Emitterkante der Laserdiode im Wesentlichen quer zur Längsachse des Sensorarrays verläuft. Da der Abstrahlwinkel quer zur Emitterkante grösser und die Emission entlang der quer zur Emitterkante liegenden Divergenzachse - nämlich der Fast-Axis - homogener ist als längs der Emitterkante, kann dadurch eine homogenere Ausleuchtung des Codes erzielt werden.

Hingegen weist die emittierte Strahlung in der Slow-Axis-Richtung, d.h. in Richtung der Divergenzachse parallel zur Emitterkante, einen unerwünscht ungleichen Intensitätsverlauf auf, der sich bei paralleler Anordnung von Laserdiode und Sensorarray negativ auf die Qualität der Codeprojektion auswirkt. Bei der erfindungsgemässen Anordnungsweise wird nun zur Erzeugung der Code-Projektion im Wesentlichen ein in einer Ebene senkrecht zur Emitterkante überlappender Teil der Laserdiodenemission verwendet wird.

Erfindungsgemäss wird die homogenere Beleuchtung des Codes durch eine derartige Anordnung der Laserdiode relativ zum Codeträger erreicht, bei der die Fast-Axis der Laserdiodenemission parallel zur Erstreckungsrichtung des Positionscodes orientiert ist - wobei im Falle einer Anordnung des Positionscodes z.B. in Umfangsrichtung auf einer Kreisscheibe die Beleuchtung durch die Laserdiode mit der Fast-Axis parallel zur Tangentialrichtung des abzubildenden Teiles des Positionscodes erfolgt. Erfindungsgemäss ist daher die Laserdiode derart relativ zur Sensorzeile orientiert, sodass die Fast-Axis - also die senkrecht zur Emitterkante verlaufenden Divergenzachse - der Laserdiodenemission bei der dadurch erzeugten Projektion auf dem Erfassungselement im Wesentlichen parallel zur Längsachse des Erfassungselements orientiert ist. Dadurch kann eine homogenere Ausleuchtung des Codes erzielt und der negative Einfluss des ungleichmässigen Intensitätsverlaufs der Laserdiodenemission längs der Emitterkante - also in Slow-Axis-Richtung - verringert oder sogar gänzlich verhindert werden.

Des Weiteren kann durch eine die erfindungsgemässe, im Wesentlichen quer ausgerichtete Anordnung der Laserdiode relativ zum Sensorarray die als Strahlungsquelle dienende Laserdiode näherungsweise als Punktlichtquelle betrachtet werden, wodurch ein höherer Kontrast in der Abbildung erzielbar ist.

Zwar wird erfindungsgemäss - verglichen mit der gemäss dem Stand der Technik üblichen parallelen Anordnung von Laserdiode und Sensorarray - ein geringerer Teil der emittierten Strahlung zur Erzeugung der Code-Projektion verwendet, jedoch kann ein erheblich höherer Kontrast in der Code-Abbildung und - durch die vergleichsweise homogene Abstrahlcharakteristik in einer Achse quer zur Emissionskante - eine sehr homogene Ausleuchtung des Codes erzielt werden. Dadurch können nun erhöhte Messgenauigkeiten - verglichen mit den erreichten Genauigkeiten bei Winkelmesseinrichtungen des Standes der Technik - ermöglicht werden.

Unter der im Wesentlichen senkrecht ausgerichteten Anordnungsweise der Laserdiode relativ zum Sensorarray ist dabei insbesondere eine strenge senkrechte Ausrichtung zu verstehen, jedoch kann der vorteilhafte Effekt erfindungsgemäss insbesondere auch bei einer um etwa bis 5° abweichenden Ausrichtung von der strengen senkrechten Anordnungsweise, im Speziellen auch bei einer um bis etwa 10° abweichenden Ausrichtung, erzielt werden.

Zusätzlich kann dabei mindestens ein Teil der emittierten Strahlung mittels eines fokussierenden Elements definiert auf die Empfangsbereiche fokussiert werden. Dadurch erhöht sich die Intensität der auf dem Erfassungselement auftreffenden Strahlung. Insbesondere wird die Strahlung in einer ersten Ebene fokussiert, die senkrecht zur Längsachse des Sensorarrays ausgerichtet ist. In einer insbesondere zur ersten Ebene senkrechten, zweiten Ebene kann die Strahlung - je nach Bedarf zur Erzeugung eines geeigneten Strahlenverlaufs - entweder kollimiert, aufgeweitet, ebenso fokussiert oder gar nicht umgeformt werden. Beispielsweise können dafür Zylinderlinsen, asphärische optische Elemente oder Fresnel-Optiken, die im Strahlgang vor oder nach dem Codeträger angeordnet sind und beispielsweise die optische Strahlung gezielt auf die Empfangsbereiche fokussieren, zum Einsatz kommen.

Vorzugsweise ist der Codeträger rotatorisch oder entlang einer Achse relativ zum Erfassungselement bewegbar. Als relative Lage des Codeträgers werden dann ein Winkel beziehungsweise eine Länge erfasst.

Die Laserdiode und das Sensorarray können gegenüberliegend jeweils auf einer eigenen Platine oder nebeneinander auf einer gemeinsamen Platine angeordnet sein. In beiden Fällen erfolgt dabei die erfindungsgemässe Anordnungsweise mit der senkrechten Ausrichtung der Emitterkante relativ zum Sensorarray.

Bei einer Ausführungsform mit Anordnung der Laserdiode und des Sensors auf einer gemeinsamen Platine emittiert die Laserdiode - mit der Fast-Axis parallel zur Erstreckungsrichtung des abzubildenden Teiles des Positionscodes - optische Strahlung auf den Codeträger, wodurch eine homogene Abbildung des Positionscodes erzeugt wird. Mittels eines im Strahlgang nach dem Codeträger angeordneten Umlenkelements - wie beispielsweise einer Spiegelfläche - kann dann die Abbildung des Codes auf das Erfassungselement umgelenkt werden. Ebenso möglich ist eine Anordnung des Codeträgers im Strahlgang nach dem Umlenkelement.

Als Positionscode sind grundsätzlich jegliche Mittel zu verstehen, durch die eine optische Abbildung eines Codes in Abhängigkeit von der Dreh-Lage des Codeträgers relativ zum Erfassungselement erzeugt werden kann. Eine einfache Ausführung eines Codeträgers ist ein teildurchlässiges Element mit transmittiven und absorbierenden oder diffus streuenden Bereichen, die Markierungen des Codes darstellenden. Ebenso sind diffraktive und nicht diffraktive Bereiche als Markierungen möglich. Wird auf eine Teilfläche eines solchen Codeträgers Strahlung emittiert, so entsteht eine optisch auslesbare Schattenprojektion mit codierter Lageinformation. Durch ein Auslesen des Codes kann eine Lage des Codeträgers relativ zur Strahlungsquelle und/oder zum Detektor abgeleitet werden. Ebenso ist alternativ zum Durchlichtprinzip auch die Ausbildung des Codeelements nach dem Auflichtprinzip möglich, wobei dann die Codeprojektion beispielsweise durch reflektierende und absorbierende Bereiche, die den Code darstellen, erzeugt werden kann.

Es besteht dabei die Möglichkeit, sowohl eine absolute Codierung, als auch eine relative, d.h. inkrementelle, Codierung zu verwenden. Allerdings besteht bei relativen Codierungen der Nachteil, nach einem Stromausfall den Winkelmesser neu initialisieren zu müssen.

Bei einer Ausführungsform der Lagemesseinrichtung als Winkelmesser ist der Codeträger insbesondere um eine Achse herum als Drehkörper, beispielsweise als flacher Zylinder oder Ring, ausgebildet. Zum Messen von beschränkten Winkelbereichen kann es genügen, den Codeträger als Zylinder- oder Ringsegment auszubilden. Bei einer Ausführungsform als Längenmesser weist der Codeträger dagegen insbesondere eine längliche und flache quader- oder stabförmige Gestalt auf. Er kann aus Glas, Kunststoff oder anderem optisch transparenten Material, sowie auch aus nicht-transparentem Material mit Schlitzen und/oder Löchern gefertigt oder als diffraktives optisches Element ausgebildet sein. Erfolgt das Erzeugen eines Abbilds des Codes in Reflexion, so kann der Positionscode zum Beispiel durch reflektierende und absorbierende Bereiche als Markierungen ausgebildet sein.

Je nach gewählter Ausführungsform setzt sich der Positionscode aus mehreren in Umfangs- oder Achsrichtung beabstandeten Markierungen zusammen, die eine Codespur bilden, wobei der Positionscode auch mehrere solcher Spuren, die dann radial bzw. parallel beabstandet angeordnet sind, aufweisen kann.

Als Erfassungselemente kommen dabei insbesondere Sensorarrays in Frage, wobei im Speziellen - wie aus dem Stand der Technik bekannt - z.B. in einer Zeile aufgereihte Fotodioden, CCD- oder CMOS-Sensoren sowie auch Flächenarrays verwendet werden können.

Die Anordnung von Codeträger und Abtasteinrichtung, wobei als Abtasteinrichtung die Laserdiode - gegebenenfalls mit nachgeordneter Strahlumformungsoptik - zusammen mit dem Erfassungselement verstanden wird, ist derart, dass eine relative Bewegung in einem Freiheitsgrad, insbesondere eine Relativ-Drehbewegung oder eine relative Längsbewegung entlang einer Achse, zwischen Codeträger und Abtasteinrichtung ermöglicht wird. Eine Drehbewegung erfolgt um eine Drehachse des Codeträgers und/oder der Abtasteinrichtung. Zum Beispiel ist der Codeträger um eine Achse drehbar angeordnet und dreht sich mit einem Element, dessen Winkelstellung erfasst werden soll, mit, während die Abtasteinrichtung fix positioniert ist. Ebenso möglich wäre ein Mitdrehen der Abtasteinrichtung mit dem Element, dessen Winkelstellung erfasst werden soll, während der Codeträger fest bleibt.

Ein Einsatzbereich für erfindungsgemässe Lagemesseinrichtungen sind geodätische Messinstrumente mit der Funktion der Richtungs- und Winkelbestimmung. So sind beispielsweise Theodoliten mit horizontalem und vertikalem Teilkreis und entsprechenden Ableseeinrichtungen ausgestattet, um Horizontal- und Vertikalwinkel mit höchster Genauigkeit messen zu können. Ebenso finden Lagemesseinrichtungen in Messmaschinen aller Art, wie z.B. Koordinatenmessmaschinen mit Gelenkarmen, Anwendung.

Die erfindungsgemässe Lagemesseinrichtung wird nachfolgend anhand von in den Zeichnungen schematisch dargestellten Ausführungsbeispielen rein beispielhaft näher beschrieben. Im Einzelnen zeigen
- Fig. 1: eine Ringscheibe als Codeträger mit einem optisch erfassbaren Positionscode nach dem Stand der Technik;
- Fig. 2: eine Lagemesseinrichtung des Standes der Technik, wobei ein Codeträger zwischen Beleuchtungsquelle mit Kollimationsoptik und Detektor angeordnet ist;
- Fig. 3: eine Winkelmesseinrichtung des Standes der Technik mit paralleler Anordnung von Laser-Emitterkante und Sensorarray;
- Fig. 4: eine erste Ausführungsform einer erfindungsgemässen Winkelmesseinrichtung mit Anordnung der Laser-Emitterkante quer zum Sensorarray;
- Fig. 5: eine zweite Ausführungsform einer erfindungsgemässen Winkelmesseinrichtung mit einer der Laserdiode nachgeordneten Strahlumformungsoptik;
- Fig. 6: eine dritte Ausführungsform einer erfindungsgemässen Winkelmesseinrichtung mit Umlenkelement;
- Fig. 7: eine vierte Ausführungsform einer erfindungsgemässen Winkelmesseinrichtung mit Umlenkelement, das ebenso als Codeträger dient und die Codeprojektion auf das Sensorarray fokussiert;
- Fig. 8: eine erste Ausführungsform einer erfindungsgemässen Längenmesseinrichtung mit Anordnung der Laser-Emitterkante quer zum Sensorarray; und
- Fig. 9: eine zweite Ausführungsform einer erfindungsgemässen Längenmesseinrichtung.

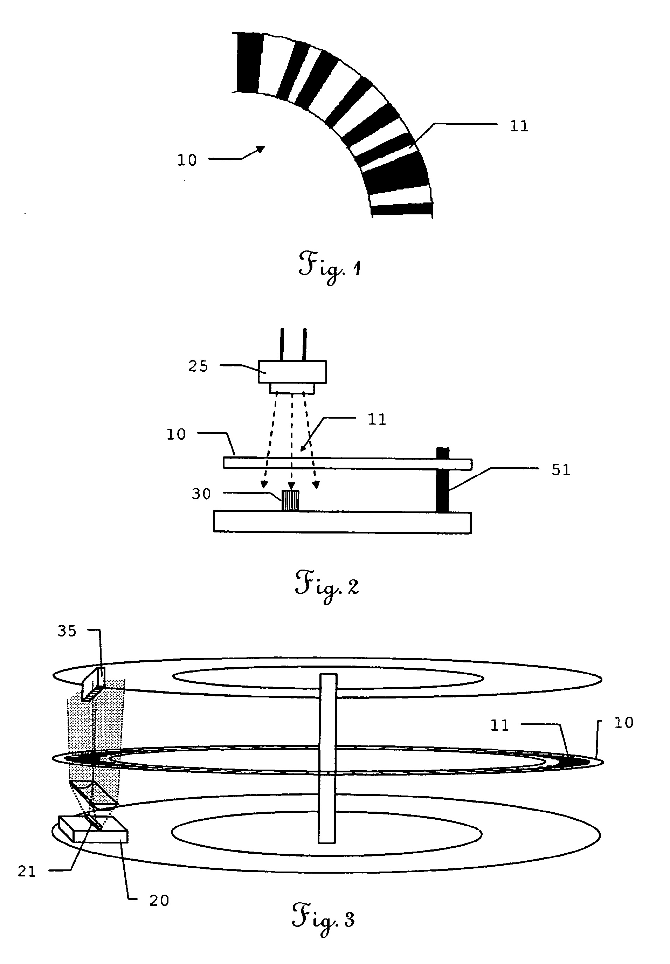

In Figur 1 ist ein Codeträger 10 mit einem optisch erfassbaren Positionscode 11 nach dem Stand der Technik zum Bestimmen einer Dreh-Lage dargestellt. Der Codeträger 10 ist als Ringsegment und beispielsweise aus Kunststoff ausgebildet und weist als Positionscode 11 eine konzentrisch angeordnete Codespur auf. Die weissen Bereiche des Positionscodes 11 sind lichtdurchlässig und die schwarzen Bereiche lichtundurchlässig ausgebildet. Durch ein Anleuchten eines positionsabhängigen Teils des Codeträgers 10 kann eine Schattenprojektion mit codierter Information über den angeleuchteten Teil des Codeträgers 10, und somit mit Information über eine Dreh-Lage des Codeträgers 10 relativ zu einer beleuchtenden Strahlungsquelle, die in den folgenden Figuren gezeigt wird, erzeugt werden.

Figur 2 zeigt eine Lagemesseinrichtung zur Winkelbestimmung des Standes der Technik mit einer LED 25 als Strahlungsquelle, die Strahlung auf einen Codeträger 10 emittiert. Die emittierte Strahlung ist durch die gestrichelten Linien dargestellt. Der Codeträger 10 weist einen von seiner Dreh-Lage abhängigen Code als Positionscode 11 auf und ist rotatorisch beweglich um eine Stange als Rotationsachse 51 ausgebildet. Wie in Figur 1 dargestellt kann der Codeträger 10 lichtdurchlässige und lichtundurchlässige Bereiche als Positionscode 11 aufweisen. Dadurch wird der Code mittels - gegebenenfalls kollimierter oder optimal umgeformter - Strahlen auf ein gegenüber der Strahlungsquelle 20 angeordnetes Erfassungselement 30 abgebildet. Da relativ lange Belichtungszeiten verwendet werden, reicht die Qualität der Codeabbildung - d.h. beispielsweise der Kontrast der auf dem Erfassungselement 30 auftreffenden Strahlen - aus, um den Positionscode 11 auszulesen und daraus eine Dreh-Lage des Codeträgers 10 relativ zum fix positionierten Erfassungselement 30 abzuleiten. Aufgrund der verhältnismässig inhomogenen Beleuchtung des Codes 11 ist jedoch die Dreh-Lage nur mit entsprechend nach oben begrenzter Genauigkeit und begrenzter Auslesegeschwindigkeit bestimmbar. Ebenso ist durch die erforderten langen Belichtungszeiten auch die Rotationsgeschwindigkeit des Codeträgers 10 - zur Vermeidung von Fehlmessungen - nach oben beschränkt.

Figur 3 zeigt eine Lagemesseinrichtung zur Winkelbestimmung des Standes der Technik, wobei eine Laserdiode 20 als Strahlungsquelle verwendet wird. Laserdiode 20 ist dabei so angeordnet, dass die Emitterkante 21 parallel zum Sensorarray 35 ausgerichtet ist. Dies bedeutet, dass die längs der Emitterkante 21 verlaufende Divergenzachse - nämlich die Slow-Axis - der Laserdiodenemission bei der dadurch erzeugten Projektion auf dem Zeilensensor 35 im Wesentlichen parallel zur Längsrichtung des Zeilensensors 35 orientiert ist. Da die emittierte Strahlung in Richtung der Emissionskante 21 - bzw. in Richtung der Slow-Axis - jedoch eine geringere Divergenz als in Querrichtung - nämlich der Fast-Axis - aufweist und somit eine eher linienförmige Strahlungsquelle vorhanden ist, ist die auf dem Sensorarray 35 erzeugte Projektion verhältnismässig kontrastarm und unscharf. Des Weiteren weist Emission der Laserdiode 20 in Richtung der Slow-Axis eine verhältnismässig inhomogene Abstrahlcharakteristik auf, wodurch unerwünschte, nicht durch den Positionscode bedingte Intensitätsschwankungen der auf dem Sensorarray 35 erzeugten Projektion entstehen können.

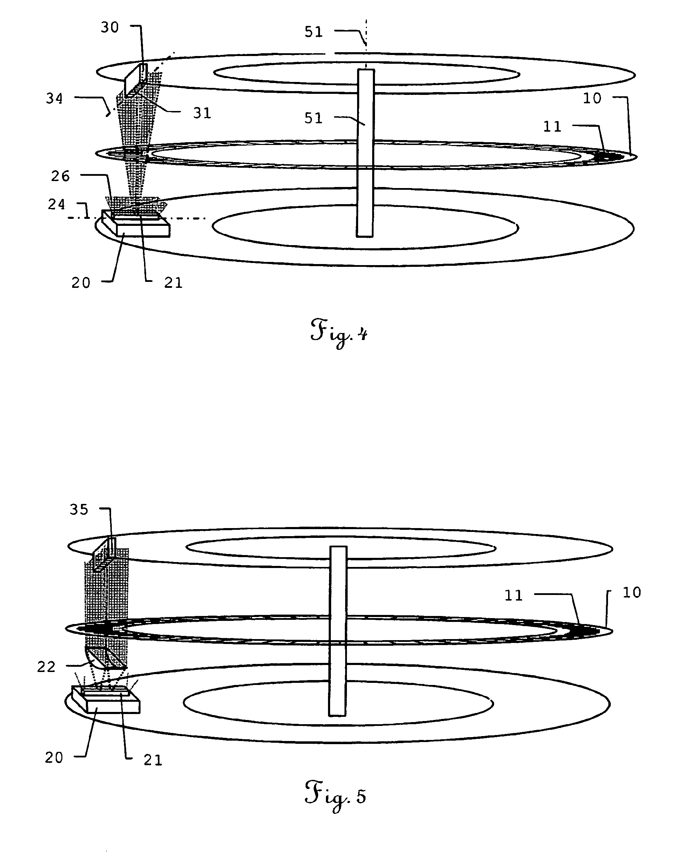

In Figur 4 ist eine erfindungsgemässe optoelektronische Winkelmessvorrichtung zum Bestimmen einer Dreh-Lage eines Codeträgers 10, der einen Positionscode 11 trägt, in einer 3-D-Ansicht gezeigt. Der Codeträger 10 ist, wie aus dem Stand der Technik bekannt und beispielsweise in Figur 1 gezeigt, als Ring und um die Achse 51 drehbar ausgebildet, was eine Rotationsbewegung relativ zu einem fix positionierten, als Erfassungselement 30 ermöglicht. Der Positionscode 11 ist auf dem Codeträger 10 entlang eines Umfangs zur Achse 51 angeordnet.

Das Erfassungselement 30 weist in Längsrichtung mindestens eine Zeile mit einer Vielzahl von linear angeordneten lichtempfindlichen Empfangsbereichen (31) auf und ist zum Empfang von optischer Strahlung ausgebildet. Beispielsweise ist eine Vielzahl von in einer Zeile angeordneten CMOS-Sensoren als lichtempfindliche Empfangsbereiche 31 angeordnet. Die Längsachse 34 des Erfassungselements 30 ist quer zu einer zur Achse 51 radialen Richtung ausgerichtet. Eine Laserdiode 20 als Strahlungsquelle mit einer Emitterkante 21, deren Längsachsachse 24 erfindungsgemäss in zur Achse 51 radialer Richtung und somit quer zur Anordnungsachse des Sensorarrays 35 ausgerichtet ist, emittiert optische Strahlung.

Durch die erfindungsgemässe Anordnungsweise der Laserdiode 20 quer zum Erfassungselement 30 ist nun eine homogenere Ausleuchtung des Codes 11 erzielbar, da der Abstrahlwinkel quer zur Emitterkante 21 grösser ist.

Ebenso wirkt sich bei dieser Anordnungsweise die in Richtung der Emissionskante 21 verhältnismässig inhomogen verlaufende Abstrahlcharakteristik der Laserdiode 20 weniger negativ auf die Auslesbarkeit des Codes aus der Projektion aus, als bei paralleler Anordnung von Laserdiode 20 und Sensorzeile. Bei der erfindungsgemässen Anordnungsweise wird nun zur Erzeugung der Code-Projektion im Wesentlichen ein in einer Ebene senkrecht zur Emitterkante 21 überlappender Teil der Laserdiodenemission 26 verwendet wird und somit die in einer Achse senkrecht zur Emitterkante 21 emittierte Strahlung auf die Sensorzeile - parallel zu dessen Längsachse 34 - projiziert.

Des Weiteren kann durch die erfindungsgemässe, quer ausgerichtete Anordnung der Laserdiode 20 relativ zur Sensorzeile des Erfassungselements 30 die als Strahlungsquelle dienende Laserdiode 20 näherungsweise als Punktlichtquelle betrachtet werden, wodurch ein höherer Kontrast in der Code-Abbildung erreicht werden kann.

Zwar wird nun erfindungsgemäss - verglichen mit der parallelen Anordnung von Laserdiode 20 und Sensorarray - ein geringerer Teil der emittierten Strahlung zur Erzeugung der Code-Projektion verwendet, jedoch kann ein erheblich höherer Kontrast in der Code-Abbildung und - durch die vergleichsweise homogene Abstrahlcharakteristik in einer Achse quer zur Emissionskante 21 - eine sehr homogene Ausleuchtung des Positionscodes 11 erzielt werden. Dadurch können nun erhöhte Messgenauigkeiten - verglichen mit den erreichten Genauigkeiten bei Winkelmesseinrichtungen des Standes der Technik - ermöglicht werden.

Die CMOS-Sensoren der Sensorzeile erfassen dabei die durch den Codeträger 10 erzeugte Abbildung, wobei für jeden einzelnen Sensor ein elektrisches Signal mit Strahlungsempfanginformation erzeugt wird. Anhand dieser Strahlungsempfanginformationen der einzelnen Sensoren kann der abgebildete Teil des Positioncodes 11 entschlüsselt werden und daraus eine Winkelstellung als relative Dreh-Lage des Codeträgers 10 zum Erfassungselement 30 abgeleitet werden.

Das erfindungsgemäss erzielte Erhöhen des Kontrasts und Homogenisieren der unerwünschten Intensitätsschwankungen der auf dem Erfassungselement 30 auftreffenden Strahlung ermöglicht eine Verkürzung der Belichtungszeit und eine Verbesserung der Auslesbarkeit des Codes.

Anhand des erfindungsgemässen Verfahrens kann beispielsweise eine Rotationsbewegung eines Elements, dessen Winkellage bestimmt werden soll, auf den Codeträger 10 übertragen und dadurch die Winkellage dieses Elements abgeleitet werden. Das Element kann zum Beispiel ein Element einer geodätischen Vermessungsstation sein.

In Figur 5 ist eine weitere Ausführungsform für eine erfindungsgemässe optoelektronische Winkelmesseinrichtung zum Bestimmen einer Dreh-Lage eines Codeträgers 10 gezeigt. Im Unterschied zu Figur 4 ist nun der Laserdiode 20 eine strahlformende Optik 22 nachgeordnet, die die emittierte Strahlung in einer Achse quer zur Ausrichtung der Emissionskante 21 kollimiert. Als Erfassungselement ist hier ein Sensorarray 35 vorgesehen.

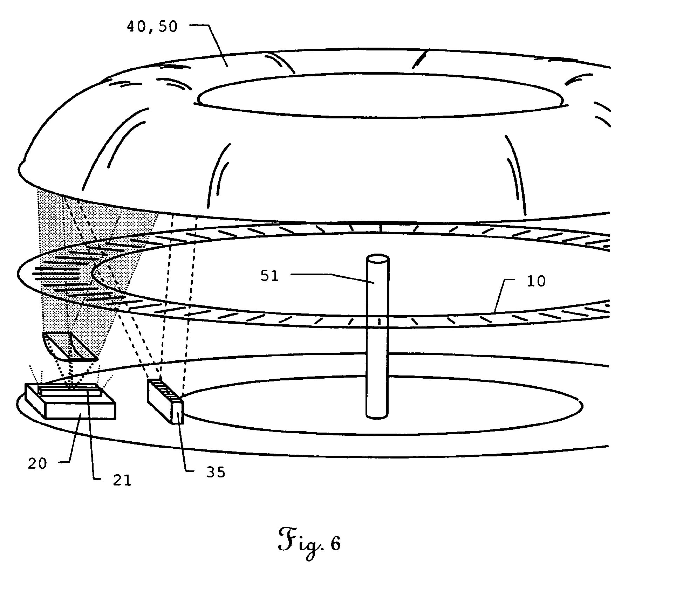

Bei der Ausführungsvariante in Figur 6 sind Laserdiode 20 und Sensorarray 35 auf einer gemeinsamen Platine angeordnet, wobei erfindungsgemäss die Emitterkante 21 senkrecht zur Anordnungsrichtung des Sensorarrays 35 ausgerichtet ist.

Die in der Divergenzachse parallel zur Emissionskante 21 - der Slow-Axis - ausgesendete, verhältnismässig geringfügig divergente Strahlung wird durch ein gekrümmtes und fokussierendes Umlenkelement 50 auf das Sensorarray 35 fokussiert. Anhand des Codeträgers 10 wird nun eine Projektion eines lageabhängigen Teiles des Positionscodes 11 erzeugt, die durch das Sensorarray 35 erfassbar ist. Das Umlenkelement 50, das auch als fokussierendes Element 40 ausgebildet ist, weist dazu eine gekrümmte, reflektierende Fläche auf. Durch die Reflexionsfläche wird die Strahlung definiert in einer Achse quer zur Längsachse des Sensorarrays 35 fokussiert. Dadurch erhöht sich die Intensität der auf dem Sensorarray 35 auftreffenden, die Abbildung erzeugenden Strahlung.

Das Umlenkelement 50 kann dabei zusammen mit dem Codeträger 10 relativ zur Platine, auf der die Strahlungsquelle und der Sensorarray 30 angebracht sind, drehbar beweglich sein und in jeder Winkelstellung die Strahlung fokussierend auf den Sensorarray 35 umlenken.

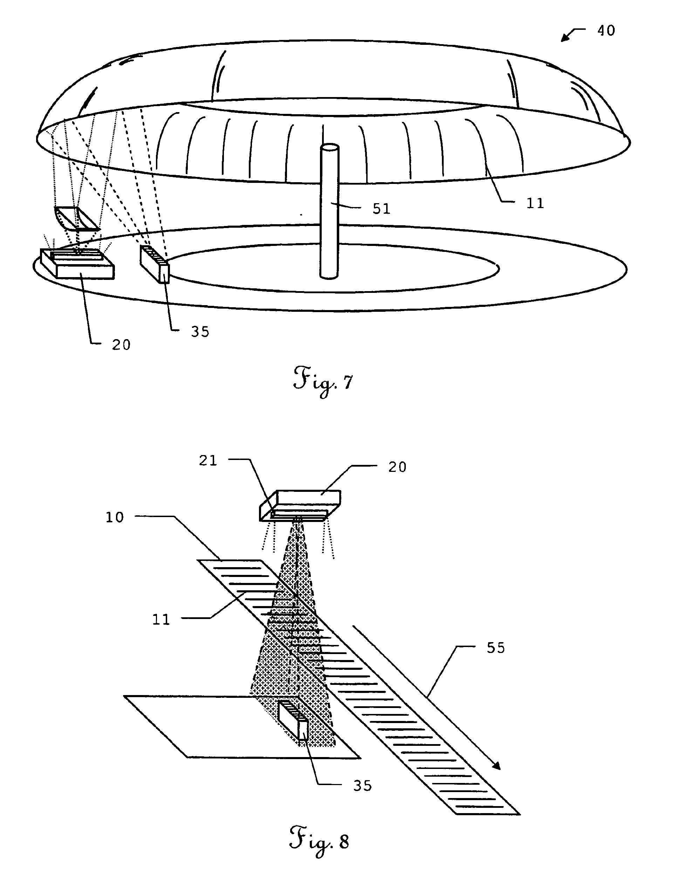

Figur 7 zeigt eine erfindungsgemässe Lagemesseinrichtung mit einem als Codeträger ausgebildeten fokussierenden Element 40. Das fokussierende Element 40 ist ähnlich dem in Figur 6 gezeigten fokussierenden Umlenkelement ausgebildet, allerdings in einer anderen Perspektive dargestellt. Das hier dargestellte, zusätzlich als Codeträger ausgebildete fokussierende Element 40 weist an der nach unten zeigenden, reflektierenden Fläche einen als Hologramm ausgebildeten Positionscode 11 entlang eines Umfangs zur Achse 51, um welche das fokussierende Element 40 drehbar ausgebildet ist, auf. Emittiert nun die Laserdiode 20 optische Strahlung auf einen drehlageabhängigen Teil des fokussierenden Elements 40, so wird beim in Reflexion erfolgenden Fokussieren der Strahlung auf das Erfassungselement zusätzlich eine durch das Erfassungselement optisch erfassbare Abbildung eines entsprechenden Teiles des Positionscodes 11 erzeugt.

Figur 8 zeigt eine erfindungsgemässe Lagemesseinrichtung zur Bestimmung einer Länge entlang einer Achse 55. Dazu ist der Codeträger 10 als länglicher, dünner Quader ausgebildet und in Richtung seiner Längsachse 55 beweglich. Der Positionscode 11 erstreckt sich dabei in Richtung der Längsachse 55. Eine als Laserdiode 20 ausgebildete Strahlungsquelle emittiert optische Strahlung auf das Sensorarray 20, wobei durch den zwischengeordneten Codeträger 10 eine Projektion eines lageabhängigen Teiles des Positionscodes 11 auf dem Sensorarray 35 entsteht.

Erfindungsgemäss ist dabei - im Gegensatz zum Stand der Technik - eine Anordnung der Laserdiode relativ zum Sensorarray vorteilhaft, bei der die Längsachse der Emitterkante 21 im Wesentlichen senkrecht zur Längsachse des Sensorarrays 30 ausgerichtet ist. Die sich dadurch ergebenden Vorteile sind bereits vorgängig beschriebenen.

Die in Figur 8 dargestellte Längenmesseinrichtung kann beispielsweise eingesetzt werden für Koordinatenmessmaschinen mit einem Abtastarm zum Abtasten einer Probe, wobei der Abtastarm unabhängig voneinander in drei zueinander senkrechte Richtungen beweglich ist. Die durch den Abtastarm beim Abtasten zurückgelegten Strecken können nun erfindungsgemäss mit einer verbesserten Genauigkeit bestimmt und somit eine Oberflächenstruktur der Probe genauer abgeleitet werden.

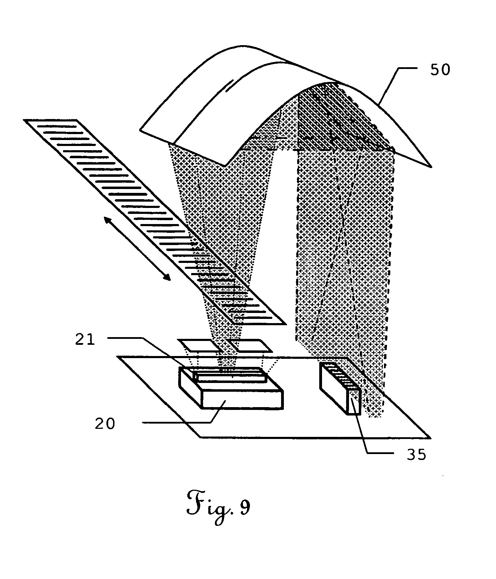

Figur 9 zeigt eine alternative Ausführungsform zur Längenmessvorrichtung aus Figur 8. Die Laserdiode 20 und das Sensorarray 35 sind dabei auf einer gemeinsamen Platine aufgebracht, wobei durch ein fokussierendes Umlenkmittel 50 die Codeprojektion auf das Sensorarray 35 projiziert wird. Der Laserdiode 35 sind des Weiteren Abschattungsplatten nachgeordnet, sodass die Beleuchtung des Codeträgers bei der erfindungsgemässen Anordnungsweise einer Beleuchtungsweise, die durch eine ideale punktförmige Strahlungsquelle erzeugt wird, gleicht.

Es versteht sich, dass diese dargestellten Figuren nur Beispiele möglicher Ausführungsformen darstellen.

## Patentansprüche

1. Optoelektronisches Lagemessverfahren zum Bestimmen einer Lage, insbesondere eines Winkels oder einer Länge, eines Codeträgers (10), der einen Positionscode (11) trägt und relativ zu einem Erfassungselement (30) mit einem Freiheitsgrad, insbesondere rotatorisch oder translatorisch, beweglich ist, wobei das Erfassungselement (30) in Längsrichtung mindestens eine Zeile mit einer Vielzahl von linear angeordneten lichtempfindlichen Empfangsbereichen (31) aufweist,
mit
• einem Erzeugen einer von der Lage des Codeträgers (10) abhängigen Projektion eines Teiles des Positionscodes (11) auf dem
Erfassungselement (30), wobei das Erzeugen mindestens
□ ein Emittieren von optischer Strahlung auf den Codeträger (10) anhand einer Laserdiode (20) mit einer Emitterkante (21) und
□ ein Erfassen der Projektion durch das Erfassungselement (30)
beinhaltet, und
• einem Ableiten der Lage des Codeträgers (10) relativ
zum Erfassungselement (30) aus der Projektion,
**dadurch gekennzeichnet, dass**
die senkrecht zur Emitterkante (21) verlaufende Divergenzachse der Laserdiodenemission (26) bei der dadurch erzeugten Projektion auf dem Erfassungselement (30) im Wesentlichen parallel zur Längsachse (34) des Erfassungselements (30) orientiert ist.

2. Optoelektronisches Lagemessverfahren nach Anspruch 1, **dadurch gekennzeichnet, dass**
das Erfassungselement (30) als Sensorarray (35) ausgebildet ist.

3. Optoelektronisches Lagemessverfahren nach Anspruch 1 oder 2,
**dadurch gekennzeichnet, dass**
zur Erzeugung der Projektion des Positionscodes (11) im Wesentlichen ein in einer Ebene senkrecht zur Emitterkante (21) überlappender Teil der Laserdiodenemission (26) verwendet wird.

4. Optoelektronisches Lagemessverfahren nach einem der vorangehenden Ansprüche,
**dadurch gekennzeichnet, dass**
der Codeträger (10) um eine dem Erfassungselement (30) starr zugeordnete Achse (51) rotatorisch beweglich ist und als Lage mindestens ein Winkel des Codeträgers (10) um die Achse (51) abgeleitet wird.

5. Optoelektronisches Lagemessverfahren nach einem der vorangehenden Ansprüche,
**dadurch gekennzeichnet, dass**
ein gezieltes Fokussieren wenigstens eines Teiles der optischen Strahlung auf die Empfangsbereiche (31) beim Erzeugen der Projektion erfolgt, insbesondere in Reflexion oder durch Brechung und insbesondere wobei das Fokussieren in einer senkrecht zur Längsachse (34) des Erfassungselements (30) ausgerichteten Ebene erfolgt.

6. Optoelektronisches Lagemessverfahren nach einem der vorangehenden Ansprüche,
**dadurch gekennzeichnet, dass**
beim Erzeugen der Projektion die Strahlung durch ein Umlenkmittel (50) auf das Erfassungselement (30) umgelenkt - insbesondere reflektiert - wird.

7. Optoelektronische Lagemesseinrichtung, mit
• einem Codeträger (10), der einen optisch erfassbaren Positionscode (11) trägt,
• einer Laserdiode (20) mit einer Emitterkante (21) zur Emission von optischer Strahlung auf den Codeträger (10) und
• einem Erfassungselement (30) - das in Längsrichtung mindestens eine Zeile mit einer Vielzahl von linear angeordneten lichtempfindlichen Empfangsbereichen (31) aufweist - zum Empfang wenigstens eines Teiles der optischen Strahlung, wodurch ein vom Positionscode (11) abhängiges Abtastsignal erzeugbar ist und somit eine Lage des Codeträgers (10) relativ zum Erfassungselement (30) erfassbar ist,
wobei die Laserdiode (20) und das Erfassungselement (30) in fester räumlicher Beziehung angeordnet sind und der Codeträger (10) relativ zum Erfassungselement (30) mit einem Freiheitsgrad - insbesondere rotatorisch oder translatorisch - beweglich ist,
**dadurch gekennzeichnet, dass**
die Laserdiode (20) und das Erfassungselement (30) derart angeordnet und ausgerichtet sind, dass die senkrecht zur Emitterkante (21) verlaufende Divergenzachse der Laserdiodenemission (26) bei der dadurch erzeugten Projektion auf dem Erfassungselement (30) im Wesentlichen parallel zur Längsachse (34) des Erfassungselements (30) orientiert ist.

8. Optoelektronische Lagemesseinrichtung nach Anspruch 7, **dadurch gekennzeichnet, dass**
die Längsachse (24) der Emitterkante (21) im Wesentlichen senkrecht zur Längsachse (34) des Erfassungselements (30) ausgerichtet ist.

9. Optoelektronische Lagemesseinrichtung nach Anspruch 7 oder 8,
**dadurch gekennzeichnet, dass**
das Erfassungselement (30) als Sensorarray (35) ausgebildet ist.

10. Optoelektronische Lagemesseinrichtung nach einem der Ansprüche 7 bis 9,
**dadurch gekennzeichnet, dass**
der Laserdiode (20) eine strahlformende Optik (22) zur Formung - insbesondere Kollimation - mindestens eines Teiles der emittierten Strahlung in einer Achse quer zur Emitterkante (21) nachgeordnet ist.

11. Optoelektronische Lagemesseinrichtung nach einem der Ansprüche 7 bis 10,
**gekennzeichnet durch**
ein im Strahlgang vor oder nach dem Codeträger (10) angeordnetes oder als Codeträger (10) ausgebildetes fokussierendes Element (40) zur Fokussierung mindestens eines Teils der optischen Strahlung auf die Empfangsbereiche (31).

12. Optoelektronische Lagemesseinrichtung nach einem der Ansprüche 7 bis 11,
**dadurch gekennzeichnet, dass**
• die Laserdiode (20) und das Erfassungselement (30) auf einer gemeinsamen Ebene angeordnet sind und
• ein Umlenkelement (50) zur Umlenkung der Strahlung im Strahlgang angeordnet ist.

13. Optoelektronische Lagemesseinrichtung nach Anspruch 12, **dadurch gekennzeichnet, dass**
das Umlenkelement (50) als fokussierendes Element (40) ausgebildet ist.

14. Optoelektronische Lagemesseinrichtung nach einem der Ansprüche 7 bis 13,
**dadurch gekennzeichnet, dass**
• der Codeträger (10)
□ quader- oder stabförmig ausgebildet ist und
□ in Richtung seiner Längsachse (55) beweglich ist, wobei der Positionscode (11) zumindest teilweise entlang einer zur Längsachse (55) parallelen Achse angeordnet ist, und
• als Lage eine Länge entlang der Längsachse (55) ableitbar ist.

15. Optoelektronische Lagemesseinrichtung nach einem der Ansprüche 7 bis 13,
**dadurch gekennzeichnet, dass**
• der Codeträger (10)
□ ring- oder scheibenförmig ausgebildet ist,
□ eine dem Erfassungselement (30) starr zuordenbare Achse (51) umgibt und
□ um die Achse (51) rotatorisch beweglich ist,
wobei der Positionscode (11) zumindest entlang eines Teilumfangs zur Achse (51) angeordnet ist, und
• als Lage ein Winkel des Codeträgers (10) um die Achse (51) ableitbar ist.

## Claims

1. Optoelectronic attitude measurement method for determining an attitude, in particular an angle or a length, of a code carrier (10) which carries a position code (11) and is moveable, in particular rotationally or translationally, relative to a detection element (30) with one degree of freedom, the detection element (30) having, in the longitudinal direction, at least one line having a multiplicity of linearly arranged photosensitive reception regions (31),
comprising
• production of a projection of a part of the position code (11), depending on the attitude of the code carrier (10), on the detection element (30), the production comprising at least
o emission of optical radiation to the code carrier (10) by means of a laser diode (20) having an emitter edge (21) and
o detection of the projection by the detection element (30),
and
• derivation of the attitude of the code carrier (10) relative to the detection element (30) from the projection,
**characterized in that** the divergence axis of the laser diode emission (26) which is perpendicular to the emitter edge (21) is oriented substantially parallel to the longitudinal axis (34) of the detection element (30) in the case of the projection produced thereby on the detection element (30).

2. Optoelectronic attitude measurement method according to Claim 1, **characterized in that** the detection element (30) is in the form of a sensor array (35).

3. Optoelectronic attitude measurement method according to Claim 1 or 2, **characterized in that** substantially a part of the laser diode emission (26) which overlaps in a plane perpendicular to the emitter edge (21) is used for producing the projection of the position code (11).

4. Optoelectronic attitude measurement method according to any of the preceding claims, **characterized in that** the code carrier (10) is rotationally moveable about an axis (51) rigidly coordinated with the detection element (30) and at least one angle of the code carrier (10) about the axis (51) is derived as an attitude.

5. Optoelectronic attitude measurement method according to any of the preceding claims, **characterized in that** targeted focusing of at least a part of the optical radiation onto the reception regions (31) is effected during production of the projection, in particular in reflection or by refraction, in particular the focusing being effected in a plane oriented perpendicularly to the longitudinal axis (34) of the detection element (30).

6. Optoelectronic attitude measurement method according to any of the preceding claims, **characterized in that**, during production of the projection, the radiation is deflected - in particular reflected - by a deflection means (50) onto the detection element (30).

7. Optoelectronic attitude measurement device, comprising
• a code carrier (10) which carries an optically detectable position code (11),
• a laser diode (20) having an emitter edge (21) for emission of optical radiation to the code carrier (10) and
• a detection element (30) - which has, in the longitudinal direction, at least one line having a multiplicity of linearly arranged photosensitive reception regions (31) - for receiving at least a part of the optical radiation, with the result that a scanning signal dependent on the position code (11) can be produced and hence an attitude of the code carrier (10) relative to the detection element (30) can be detected,
the laser diode (20) and the detection element (30) being arranged in a fixed spatial relationship and the code carrier (10) being moveable - in particular rotationally or translationally - relative to the detection element (30) with one degree of freedom,
**characterized in that** the laser diode (20) and the detection element (30) are arranged and oriented in such a way that the divergence axis of the laser diode emission (20) which is perpendicular to the emitter edge (21) is oriented substantially parallel to the longitudinal axis (34) of the detection element (30) during the projection produced thereby on the detection element (30).

8. Optoelectronic attitude measurement device according to Claim 7, **characterized in that** the longitudinal axis (24) of the emitter edge (21) is oriented substantially perpendicularly to the longitudinal axis (34) of the detection element (30).

9. Optoelectronic attitude measurement device according to Claim 7 or 8, **characterized in that** the detection element (30) is in the form of sensor array (35).

10. Optoelectronic attitude measurement device according to any of Claims 7 to 9, **characterized in that** a beam-shaping optical system (22) for shaping - in particular collimating - at least a part of the emitted radiation in an axis transverse to the emitter edge (21) is arranged after the laser diode (20).

11. Optoelectronic laser measurement device according to any of Claims 7 to 10, **characterized by** a focusing element (40) arranged in the beam path before or after the code carrier (10) or formed as code carrier (10) and intended for focusing at least a part of the optical radiation onto the reception regions (31).

12. Optoelectronic attitude measurement device according to any of Claims 7 to 11, **characterized in that**
• the laser diode (20) and the detection element (30) are arranged on a common plane and
• a deflection element (50) for deflecting the radiation is arranged in the beam path.

13. Optoelectronic attitude measurement device according to Claim 12, **characterized in that** the deflection element (50) is in the form of a focusing element (40).

14. Optoelectronic attitude measurement device according to any of Claims 7 to 13, **characterized in that**
• the code carrier (10)
o is cuboid or bar-shaped and
o is moveable in the direction of its longitudinal axis (55),
the position code (11) being arranged at least partly along an axis parallel to the longitudinal axis (55), and
• a length along the longitudinal axis (55) can be derived as an attitude.

15. Optoelectronic position measurement device according to any of Claims 7 to 13, **characterized in that**
• the code carrier
o is annular or disc-shaped
o surrounds an axis (51) which can be rigidly coordinated with the detection element (30) and
o is rotationally moveable about the axis (51), the position code (11) being arranged at least along a partial circumference relative to the axis (51),and
• an angle of the code carrier (10) about the axis (51) can be derived as an attitude.

## Revendications

1. Procédé optoélectronique de mesure de position pour déterminer une position, en particulier un angle ou une longueur, d'un support de code (10) qui porte un code de position (11) et qui peut se déplacer avec un degré de liberté par rapport à un élément de détection (30), en particulier par rotation ou translation, l'élément de détection (30) présentant, dans le sens longitudinal, au moins une ligne avec une multitude de régions de réception sensibles à la lumière, placées de manière linéaire,
avec
• une production d'une projection d'une partie du code de position (11) en fonction de la position du support de code (10) sur l'élément de détection (30), la production contenant au moins
o une émission de rayonnement optique sur le support de code (10) à l'aide d'une diode laser (20) avec un bord émetteur (21) et
o une détection de la projection par l'élément de détection (30) et
• une déduction de la position du support de code (10) par rapport à l'élément de détection (30) à partir de la projection,
**caractérisé en ce**
**que** l'axe de divergence de l'émission de la diode laser (26) qui s'étend perpendiculairement au bord émetteur (21) est orienté de manière sensiblement parallèle à l'axe longitudinal (34) de l'élément de détection (30), lorsque la projection est produite sur l'élément de détection (30).

2. Procédé optoélectronique de mesure de position selon la revendication 1, **caractérisé en ce**
**que** l'élément de détection (30) est configuré comme un réseau de capteurs (35).

3. Procédé optoélectronique de mesure de position selon la revendication 1 ou 2, **caractérisé en ce**
**qu'**une partie de l'émission de diode laser (26) qui se chevauche sensiblement dans un plan perpendiculairement au bord émetteur (21) est utilisée pour la production de la projection du code de position (11).

4. Procédé optoélectronique de mesure de position selon l'une des revendications précédentes,
**caractérisé en ce**
**que** le support de code (10) est mobile en rotation autour d'un axe (51) qui est associé de manière rigide à l'élément de détection (30) et qu'au moins un angle du support de code (10) autour de l'axe (51) est déduit comme position.

5. Procédé optoélectronique de mesure de position selon l'une des revendications précédentes,
**caractérisé en ce**
**qu'**une focalisation ciblée d'au moins une partie du rayonnement optique est effectuée sur les régions de réception (31) lorsque la projection est produite, en particulier en réflexion ou par réfraction, et en particulier la focalisation étant effectuée dans un plan orienté perpendiculairement à l'axe longitudinal (34) de l'élément de détection (30).

6. Procédé optoélectronique de mesure de position selon l'une des revendications précédentes,
**caractérisé en ce**
**que**, lorsque la projection est produite, le rayonnement est dévié - en particulier est réfléchi - sur l'élément de détection (30) par un moyen de déflection (50).

7. Dispositif optoélectronique de mesure de position avec
• un support de code (10) qui porte un code de position (11) pouvant être détecté de manière optique,
• une diode laser (20) avec un bord émetteur (21) pour l'émission de rayonnement optique sur le support de code (10) et
• un élément de détection (30) - qui présente dans le sens longitudinal, au moins une ligne avec une multitude de régions de réception sensibles à la lumière, placées de manière linéaire - pour la réception d'au moins une partie du rayonnement optique si bien qu'un signal de balayage qui dépend du code de position (11) peut être produit et une position du support de code (10) par rapport à l'élément de détection (30) peut donc être détectée,
la diode laser (20) et l'élément de détection (30) étant placés en rotation fixe dans l'espace et le support de code (10) étant mobile - en particulier en rotation ou en translation - par rapport à l'élément de détection (30) avec un degré de liberté,
**caractérisé en ce**
**que** la diode laser (20) et l'élément de détection (30) sont placés et orientés de telle manière que l'axe de divergence de l'émission de la diode laser (26) qui est perpendiculaire au bord émetteur (21) est orienté, lors de la projection ainsi produite, sur l'élément de détection (30) sensiblement parallèlement à l'axe longitudinal (34) de l'élément de détection (30).

8. Dispositif optoélectronique de mesure de position selon la revendication 7, **caractérisé en ce**
**que** l'axe longitudinal (24) du bord émetteur (21) est orienté sensiblement perpendiculairement à l'axe longitudinal (34) de l'élément de détection (30).

9. Dispositif optoélectronique de mesure de position selon la revendication 7 ou 8,
**caractérisé en ce**
**que** l'élément de détection (30) est configuré comme un réseau de capteurs (35).

10. Dispositif optoélectronique de mesure de position selon l'une des revendications 7 à 9,
**caractérisé en ce**
**qu'**une optique qui forme un rayonnement (22) est placée en aval de la diode laser (20) pour la formation - en particulier la collimation - d'au moins une partie du rayonnement émis dans un axe transversalement par rapport au bord émetteur (21).

11. Dispositif optoélectronique de mesure de position selon l'une des revendications 7 à 10,
**caractérisé par**
un élément de focalisation (40) placé dans la marche des rayons devant ou après le support de code (10) pour focaliser au moins une partie du rayonnement optique sur les régions de réception (31).

12. Dispositif optoélectronique de mesure de position selon l'une des revendications 7 à 11,
**caractérisé en ce que**
• la diode laser (20) et l'élément de détection (30) sont placés sur un plan commun et
• un élément de déflection (50) est placé pour dévier le rayonnement dans la marche des rayons.

13. Dispositif optoélectronique de mesure de position selon la revendication 12, **caractérisé en ce**
**que** l'élément de déflection (50) est configuré comme un élément de focalisation (40).

14. Dispositif optoélectronique de mesure de position selon l'une des revendications 7 à 13,
**caractérisé en ce que**
• le support de code (10)
o est configuré en forme de parallélépipède ou de baguette et
o est mobile dans le sens de son axe longitudinal (55),
le code de position (11) étant placé au moins partiellement le long d'un axe parallèle à l'axe longitudinal (55) et
• que comme position une longueur peut être déduite le long de l'axe longitudinal (55).

15. Dispositif optoélectronique de mesure de position selon l'une des revendications 7 à 13,
**caractérisé en ce que**
• le support de code (10)
o est configuré en forme d'anneau ou de disque,
o entoure un axe (51) qui peut être affecté de manière rigide à l'élément de détection (30) et
o est mobile en rotation autour de l'axe (51),
le code de position (11) étant placé au moins le long d'une circonférence partielle par rapport à l'axe (51) et
• qu'un angle du support de code (10) autour de l'axe (51) peut être déduit comme position.
